Europäisches Patentamt

European Patent Office

Office européen des brevets

(19)

Publication number: **0 287 858**
**A2**

# EUROPEAN PATENT APPLICATION

(21) Application number: **88105078.5**

(22) Date of filing: **29.03.88**

(51) Int. Cl.⁴ **G06F 15/40**

(30) Priority: **24.04.87 JP 100215/87**

(43) Date of publication of application:
**26.10.88 Bulletin 88/43**

(84) Designated Contracting States:
**DE FR GB**

(71) Applicant: **International Business Machines Corporation**
**Old Orchard Road**
**Armonk, N.Y. 10504(US)**

(72) Inventor: **Kajitani, Kouichi Kajigayahausu 206**
**739-1 Shimosakunobe Takatsu-ku**
**Kawasaki-shi Kanagawa-Ken(JP)**
Inventor: **Kosaka, Kazuya**
**1-9-4-201 Asahi-cho**
**Kashiwa-shi Chiba-ken(JP)**
Inventor: **Satoh, Masaki**
**1-9-10 Higashikamata Ohota-ku**
**Tokyo-to(JP)**

(74) Representative: **Grant, Iain Murray**
**IBM United Kingdom Limited Intellectual**
**Property Department Hursley Park**
**Winchester Hampshire SO21 2JN(GB)**

(54) **Database processing apparatus.**

(57) A user friendly interface is provided to a database system using real world modelling and card-like display representation wherein the format of the display representation enables the user to select and move directly to another such representation.

As an example, the combination of a relational data base, a complex syntax language for processing it and apparatus handling the data base by executing in the language enables the user, within reason, to perform the macro-operations which he would do were he using the data base provided on a manual card system. The structure of the data base is comprised of two classes of entity, "complicate" accessible by name or via another such entity, and "basic" accessible only via a complicate entity. An entity is stored as format and data separately, these being combined in entirety for display purposes and, in appropriate part, for syntax generation, when required. The number of possible formats is limited so that full selection is a two step operation - first, the format and then the data - by name or by relational operation.

Both local and relational operations can be performed and selection of the operation to be performed is by menu. If a relational operation is instructed, selection of a field in the format of the starting entity on the display automatically generates, within the apparatus, the appropriate syntax frame, which is filled with the parameters corresponding to that part of the data segment of the entity that is displayed in the field. If the instructed operation is local, the syntax is not generated. Additional operation parameters and data can be entered from a keyboard.

FIG. 1

# DATABASE PROCESSING APPARATUS

This invention relates to database apparatus which can be operated by a user in a manner analogous to the handling of a manual card file without having to enter any code. Put another way, it relates to apparatus which permits a real world model to be dealt with, and an entity represented to a user and retrieved using a standard form such as card-like one which is displayed to provide a "snap-shot" of that real world and can be manipulated to display another related form and entity immediately.

In the past, real world models were known that give attention to objects of a real world such as a university, a company, et al. Such real world models can be reflected by conceptual elements which human being takes for thinking, and consequently have excellent comprehensibility and flexibility.

For example, " The Functional Data Model and the Data Language DAPLEX", by David W. Shipman, ACM Transactions on Database Systems, Vol. 6, No. 1. March, 1981, pp 140-173 discloses a data definition and manipulation language for a functional data model. A functional data model defines objects and their attributes in a real world by entities and functions to model the real world.

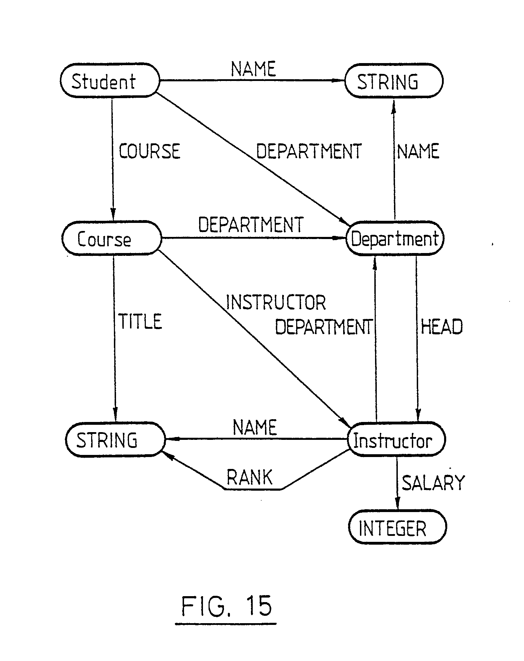

In Fig. 15 showing a functional data model which models a real world of a university, circled portions indicate entity types and arrows does functions. To each entity type one or more entities belong. For example, students A,B,C, et al. belong to the entity type "student". Functions indicate relations between one entity type and one entity type. For example, the function "COURSE" maps a student onto the courses which he/she takes. When the function "COURSE" is executed with the student A as an argument, the courses a,b,c are derived.

In such a database system, however a long manipulation sentence is required for performing a simple search, and in this regard it is inconvenient for a user. For example, for querying " who attend to lectures on the course AA by assistant professors?", the following lines are required to be inputted:

SUCH THAT FOR SOME Course (Student) Name (Dept(Course)) =

"EE" AND Rank (Instructor(Course)) =

" ASSISTANT PROFESSOR" PRINT Name (Student)
With this in mind, it is though desirable to provide a user friendly interface for fully bringing out the comprehensibility and flexibility in a real world model.

As another related prior art, Japanese Unexamined Published Patent Application 60-252967 is considered, which discloses a technique for implementing a real world model with a marketed database. This publication however doesn't describe the feature of the present invention or a user friendly interface.

Further "Spatial Management of Data", Christopher F. Herot, ACM Transactions on Database Systems, Vol. 5, No. 4, December 1980, pp 493-514 discloses a user friendly database system where required data is interactively searched based on content on a display screen. In this system, a world view showing the whole data, a main screen magnifying and showing a part of the world view designated by a user, and a detailed view showing detailed information of the data are displayed on three display systems respectively. A user can investigate easily in the world view through a joy stick. He/she can understand where he/she is in the whole data and obtain required detailed information, by combining the information displayed on the three display systems.

This system uses a so-called hierarchical technique by which detailed data is accessed from the generic data, and in this regard it is different from the configuration of the present invention where detailed data of an entity is investigated based on detailed data of another entity.

Further, Xerox Inc. offers as a knowledge base building tool "Note cards" (a trade mark of Xerox Inc.) which is used for storing knowledge in a card. In this product cards are linked with each other, as cards and not in terms of the entities represented by such cards, though, after looking at a card, a linked card can be easily shown.

The present invention provides database processing apparatus including data storage, a storage addressing system capable of accessing information in storage by record and a user/machine interface which includes a display area, user data input means and a locator mechanism, interactive with the display area, by which the user can select a portion of the display area, the storage containing records defining a common set of formats and records defining known types of data and a processor responsive to the data input means and the locator mechanism and controlling the addressing mechanism and the display area and arranged in operation to respond

to a data input representing a known entity name to cause the format record for that named entity to be accessed together with the data records for that entity and to generate a display on the display area from such records, the format defining a card-like layout with geographically differentiated fields for different data types in which the data from the data records is appropriately displayed and to automatically overlay the generated display with an action display offering a set of operation options, one possible operation being effective on the data accessed and one possible operation being effective to access another entity or other data, and

to the locator mechanism selecting a field of action display to register the selected operation option and to remove the overlayed action display and, thereafter, to the selection of a field of the generated display, to cause the selected operation to be performed in relation to that field and its contained data, so that, if the selected operation is an access operation, the records defined by the combination of the selected field and its contained data are accessed and a new display is generated

whereby the user can interrogate stored data in a manner analogous to the handling of a manual card file without having to enter any code.

Thus, the content of a displayed "card" describes an entity itself and simultaneously becomes a reduced drawing of at least a part of a world model, and then a target entity can be immediately disclosed by picking the portion relevant to the target entity in the displayed content. This provides a user friendly interface which can bring out merits of a real world model, that is, comprehensibility and flexibility.

A particular application of this, produces a database system comprising a processor, storage, a display and input means interactive therewith, the processor executing in a complex syntax language in respect of operations concerned with the data base, the data base being composed of complicate entities which are accessible by name and can be both parent and child and basic entities which can be only children accessible from a parent complicate entity, each complicate entity comprising a particular one of a plurality of stored multiple field formats and an individual data set, the processor being arranged to interface, via the display and input means, with a user, wherein the processor includes

logic, which, on the user inputting a complicate entity type and the individual name of that complicate entity, causes the processor to accesses the format for that type and the data set for that individual complicate entity, combining and displaying the same and displaying an operation menu; and which, on the user selecting an operation via the operation menu, which operation can be local to that entity or relational, causes the processor to become responsive to further inputs from the user in the appropriate one of two modes, local or relational; and

logic which, if the relational mode is selected on the operational menu and a field is selected on the entity display, causes the processor to fetch a syntax structure in one to one correspondence with that field for that format, inserting parameters derived from the particular data in that field for the entity, and to execute the syntax, fetching the format and data so derived generating a next display;

the processor, if the local mode is selected, performing direct processing in respect of the displayed entity, whereby, without knowledge of the data base handling syntax, a user can exercise the data base in a manner analogous to a manual card file system.

One form of such apparatus according to the present invention, as disclosed hereinafter, stores, for each displaying form, information on the format of the form, information on items of basic data which displayed in fields of the format, information relating at least one field with a entity type(s), that is a kind of an entity, are stored in a certain storage portion. And when a certain field of a displayed form is pointed out, information on the entity type relevant to that field is taken out from the storage portion, and based on that entity type, a form to be displayed next is determined.

The present invention will be described further by way of example with reference to an embodiment thereof as applied to a database system for handling matters relating to a company, together with an example of the prior art, and illustrated in the accompanying drawings in which:-

Fig.1 shows a block diagram illustrating one embodiment of the present invention in detail.

Fig.2 shows a diagram for explaining a three layered schema.

Fig.3 shows a diagram illustrating the conceptual schema of the above embodiment.

Fig.4 shows a diagram illustrating the external schema of the above embodiment.

Fig.5 shows a diagram illustrating the embodiment as a whole.

Figs.6 through 14 show diagrams for explaining the above embodiment.

Fig.15 shows a diagram illustrating a prior art.

First the database system is described in view of a conceptual schema, an internal schema and an external schema.

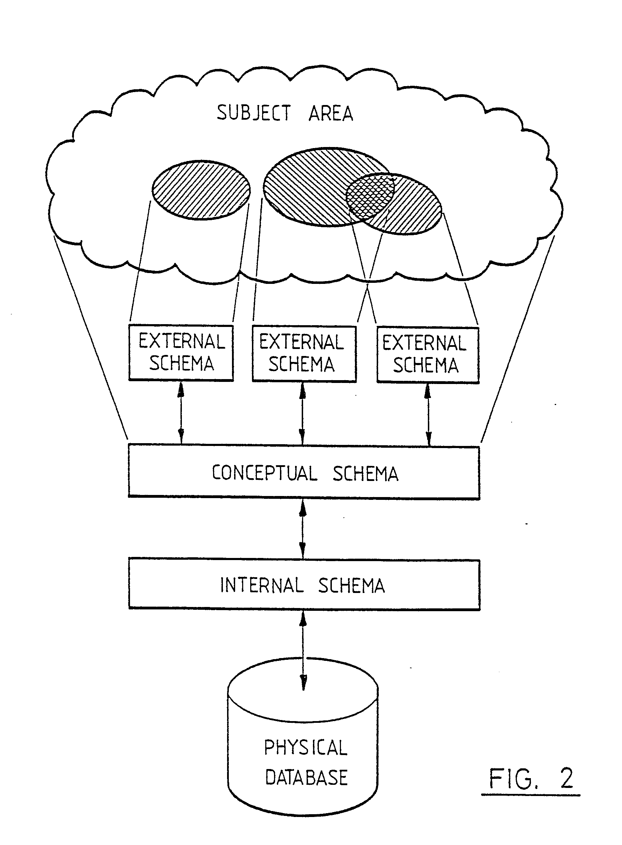

A conceptual schema, an internal schema and an external schema are related to each other as shown in Fig.2. A conceptual schema abstracts a real world by using a certain data model, and an internal schema is a version obtained by rewriting the conceptual schema so as to be more appropriate to a computer. An external schema defines a portion required by a user in the conceptual schema, and also referred to as a view.

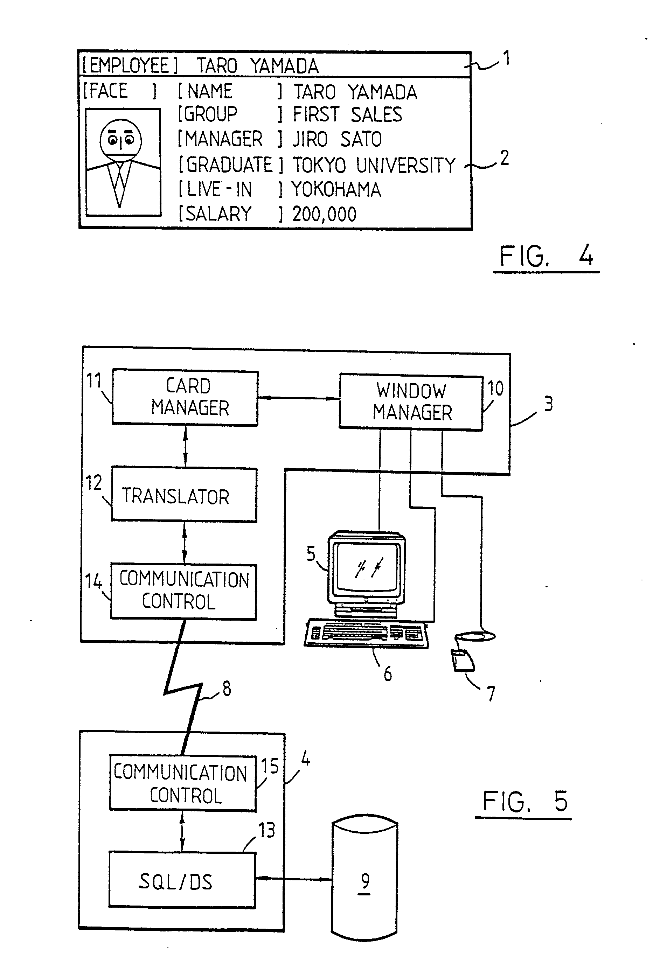

The conceptual schema of this embodiment is as shown in Fig.3. This conceptual schema is modelled by a functional data model. A functional data model is already explained and the description is not repeated here. In Fig.2, rounded blocks and rounded blocks both indicate entity sets or entity types. In the following description, a rectangular block entity type is referred to as a complicate entity type and an entity belonging to a complicate entity type is referred to as a complicate entity. An complicate entity corresponds to an object in a real world, and in this embodiment, an employee, group, university and city are complicate entity types. On the other hand, a rounded block entity type is referred to as a basic entity type, and an entity belonging to it is referred to as a basic entity. A basic entity corresponds to basic data which can be stored in a database, and in this embodiment string type, integer type and image type are basic entity types. Functions defines relations between complicate entity types and between a complicate and basic entity types. In order to investigate content of a certain object or complicate entity, basic data or basic entities relevant to the complicate entity are identified by using functions relevant to the complicate entity and then obtained from the database. By the way, after investigating a complicate entity, sometimes another type of entity is required to be investigated. For example, when an employee is on investigation, the university from which the employee graduated may be required to be investigated. For such a case a function is used. The movement from "employee" to " university" is achieved by the function "graduate".

Fig.4 shows an example of the external schema of the embodiment. This embodiment uses card like forms as an external schema. In the following description, card like forms are simply referred to as "cards", and types of cards are referred to as card types. Fig.4 depicts a card type for the entity type "employee". Other complicate entity types such as group, university and city have respectively card types assigned. By preparing a plurality of card types for one complicate entity type, different card types can be provided for different privilege levels. The content or attributes of an object can be disclosed as a whole and concise by using a card.

As exemplified in Fig.4 a card consists of a title portion 1 and body portion 2, and the title portion 1 can have indications of a name of a card type, in this case "employee", a value representing the card, in this case " Taro Yamada", which is referred to as a surrogate hereafter, and the like. The body portion can have indications of item names for fields each, such as "face ", and values for these items. The item values of Fig.4 are derived from the database by using the functions of the data model of Fig.3 as shown in Table 1 below. In this table, dots in brackets mean that identifiers are inserted there.

TABLE 1

```
---------------------------------------------------------------
Item name         I        Function
---------------------I------------------------------------------
Face              I        face(.)

Name              I        name(.)

Group             I        group(.)

Manager           I        manager(group(.))

University        I        graduation(.)

Live-in           I        live-in(.)

Salary            I        salary(.)
```

In Table 1, ranges of functions "face", "name" and "salary" are not of complicate entity but of basic

4

entity or basic data, so that the values themselves are used and brought onto the card. Function "group" and the like are ranges of complicate entities so that surrogates of them are used for indications on the card.

The internal schema of the embodiment is a relational database system SQL DS of IBM corporation. Speaking about the conceptual schema above, it is described in a certain intermediate language ( referred to as FL language hereafter), there is required a translator from FL lines to SQL lines, which is indicated by the reference numeral 12 in Fig.5. FL sentences are often used in the following description, but FL language itself is not explained here, because it uses English-like notations and is obvious to some extent, and some comments are given at involved paragraphs. Further search operations by FL lines are as a whole described at the last paragraph of this description for easily understanding.

The functional data model is related with the relational data model by relating complicate entity types with relational table. Table 2 shows as an example the relational table corresponding to the entity type "employee". Functions relevant to the entity type "employee" corresponds to attributes in the relational table, and functions and their counterparts are expressed by the same notations for convenience.

TABLE 2

```
------------------------------------------------------------------
Employee I id I name I salary I group I graduation I live-in
----------I----I------I--------I-------I------------I-------
          I    I      I        I       I            I
     I    I      I     I        I       I            I
          I    I      I        I       I            I
     I    I      I     I        I       I            I
```

In the schema above, a complicate entity is indicated by the corresponding card (Fig.4). Insertion, correction and deletion of data can be done through a card. For this purpose a certain field of the card is typed in or characters already typed are deleted. Further by typing a query condition in a field of a card, entities satisfied that condition can be retrieved (it is referred to as a query operation). Further detailed information about an item value indicated on a card can be newly displayed. In a practical example, by picking an item value, information about the item value is displayed on a new card (it is referred to as navigation). "Picking " means pointing a position on a screen by a mouse or the like. Card representation, query and navigation are explained in detail later.

Next the practical configuration of the embodiment will be explained.

Fig.5 illustrates an example where the database system according to the present invention is implemented with a workstation 3 and host computer 4. In this figure, a display 5, keyboard 6 and a mouse 7 are connected to the workstation 3, which is in turn connected to the host computer 4 through a line 8. The host computer 4 has a auxiliary storage 9 which works as a physical database. While most of procedures of the embodiment are implemented in software on the workstation 3 or the host computer 4, for easier understanding, these functions are indicated as hardware like blocks, and, indeed, they could be so implemented.

In the workstation 3, a window manager 10 is designed to control input/output operations of the display 5, keyboard 6 and mouse 7. Through the keyboard 6 or the mouse 7, information about data manipulation such as data insertion to the database, auxiliary storage 9, or information about query or navigation is inputted. Such information is supplied to a card manager 11 through the window manager 10. The card manager 11 performs data manipulation, query or navigation. For these operations card manager outputs manipulation sentences. A translator 12 translates the manipulation sentences into SQL lines and provides them for the host computer 4. A SQL/DS 13 runs on the host computer 4 and accesses the auxiliary storage 9 based on the SQL manipulation lines, and retrieves required data. The data is transformed into data for the schema of the functional model by the translator, and then the card manager 11 with window manager 10 display a card indication using the transformed data. Further communication controllers 14 and 15 are provided for the workstation 3 and host computer 4 respectively.

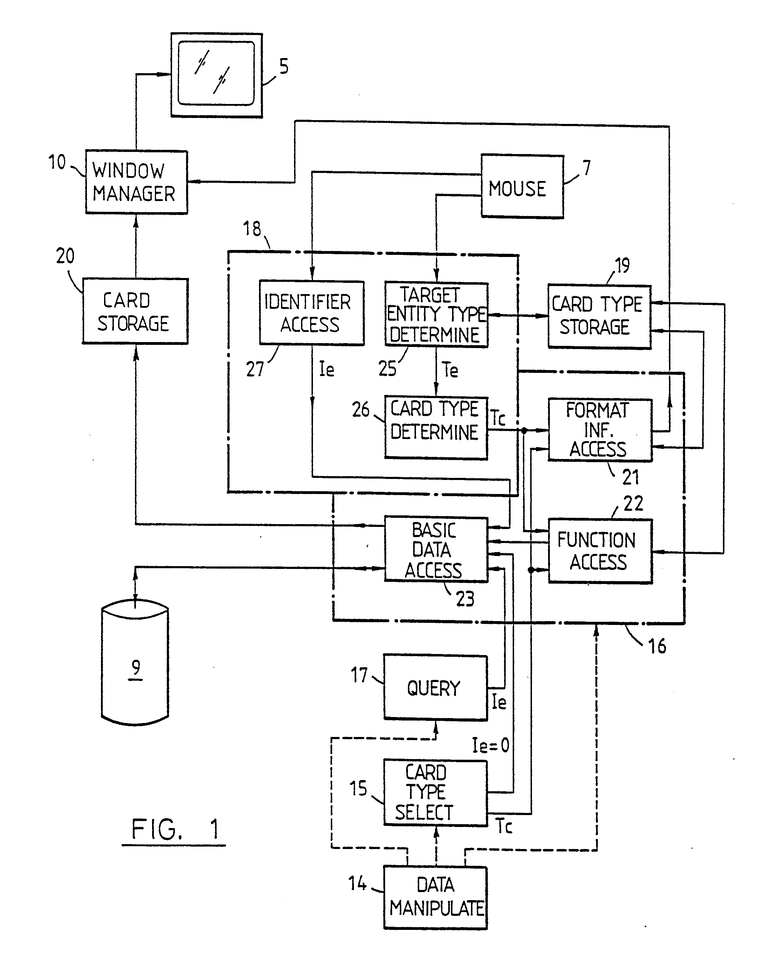

Fig.1 illustrates in detail functions which the translator 12 and SQL/DS 13 cooperate to perform. In this figure, these functions are grouped into blocks and show as if they are hardware portions for easily understanding. Further portions corresponding to ones in Fig.5 are indicated by the same references, and the detailed description for them is omitted here.

In Fig.1, the above functions performed by the card manager 11 et al. are roughly grouped into a data manipulation portion 14, a card type selection portion 15, a card displaying portion 16, a query portion 17

5

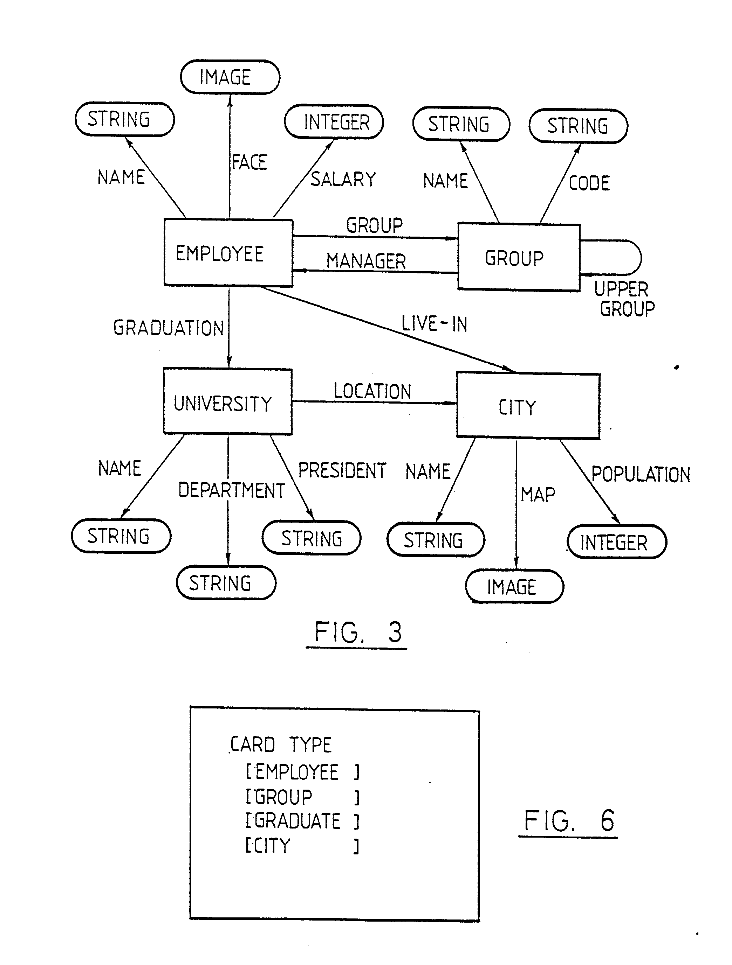

and a navigation portion 18. The data manipulation portion 14 is designed to process data manipulation such as data input to the database. The data type selection portion 15 is designed to prompt the user to select a card type at the initial time by displaying a card type selection menu as shown in Fig.6, and to output a card type signal Tc et al. according to the user's selection. The card displaying portion 16 is designed to display the information on a required entity using a card corresponding to the entity. The query portion 17 is designed to determine entities satisfying a query condition and display them. The navigation portion 18 is designed to determine the type of a new card and the identifier of an entity to be newly displayed, according to the field picked through the mouse 7, and provide the determination result for the card displaying portion 16.

The navigation portion 18 accesses a card type storage portion 19 and a card storage portion 20 for the above determination.The card type storage portion 19 stores the information as shown in the Table 3. The card storage portion 20 stores the information as shown in the Table 4. In the Table 3 the left column is for description of the information and the right is for the examples.

TABLE 3

```
--------------E-3TABL---------------------------------

card type name                I   employee
```

| | | |
|---|---|---|
| card height | I | 60 |
| card width | I | 100 |
| name if entity indicated on card | I | employee |
| item name for each field | I | (1) face photo |
| | I | (2) name |
| | I | . |
| | I | . |
| | I | (7) salary |
| function for item name of each field | I | (1) face(.) |
| | I | (2) name(.) |
| | I | . |
| | I | . |
| | I | (7) salary(.) |
| value type of each field | I | (1) image |
| | I | (2) character |
| | I | . |
| | I | . |
| | I | (7) integer |
| position at which item name is outputted for each field | I | (1) (1, 1) |
| | I | (2) (30, 1) |
| | I | . |
| | I | . |
| | I | (7) (30, 51) |
| position at which value for each field is outputted | I | (1) (1, 10) |
| | I | (2) (60, 1) |

```
        I    .

        I    .

        I   (7)   (60,  51)
```

TABLE 4

Card type name
Position of card with respect to screen
Identifier of entity displayed on card
Item value of field
    (in addition, surrogate if value is entity identifier)
Type of value (entity name)


Now displaying of an example card, query operation and navigation are explained in sequence.

An example card is displayed when only the type of a card is specified but an entity to be displayed on it is not specified, and a predetermined existing or imaginary entity is displayed on the example card. The example card cause a user easily to understand the content of a card type by an example. Fig.4 shows an example card of the card type of " employee".

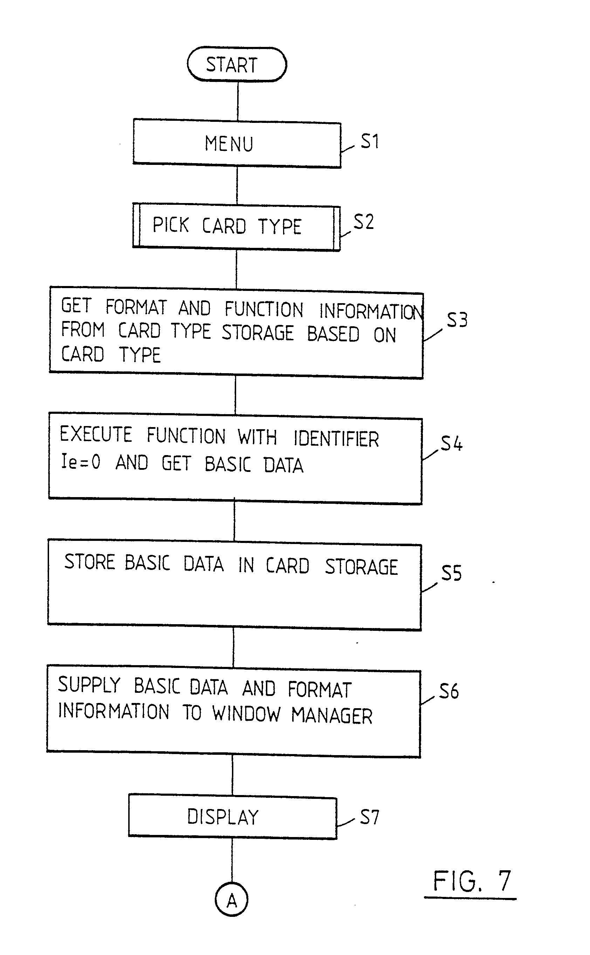

Referring to Figs.1 and 7, first the card type selection portion 15 displays the card selection menu as shown in Fig.6 through the display system ( step S1). The user picks the required card indication by the mouse 7 ( step S2). In this connection note that double vertical lines block means a user operation. The card type selection portion 15 provides a card type signal based on the picked information for both a format information accessing portion 21 and a function information accessing portion 22. The format information accessing portion 21 and the function information accessing portion 22 obtain format related information and function related information respectively from the card type information of the Table 3 (step S3). The card type selection portion 15 afterward supplies a default entity identifier Ie = 0 to a basic data accessing portion 23, and the portion 23 performs the function supplied from the function information accessing portion 22 taking Ie = 0 as an argument, and then retrieves the required basic data from the database( step S4). The basic data is stored in the card storage portion 20( step S5) and is then supplied to the window manager 10 along with the format information (step S6). The window manager 10 opens a window on the screen of the display system 5 and performs card indication (step S7).

In the step S4 where the above basic data is retrieved, FL language level and SQL language level have the following procedures respectively.

FL : GET Employee( id(.) = 0)

PROJECT name(.), group(.), name(group(.)), manager(group(.)), name(manager(group(.))), graduation(.), name(graduation(.)), live-in(.), name(live-in(.)), salary(.)


SQL : SELECT e1.name, e1.group, e2.name, e2.manager,e3.name, e1.graduation, e4.name, e2.live, e5.name,e1.salary

FROM Employee e1, Group e2, Employee e3, University e4, City e5
    WHERE e1.group = e2.id
AND e2.manager = e3.id
AND e1.graduation = e4.id
AND e1.live-in = e5.id
AND (e1.id = 0)


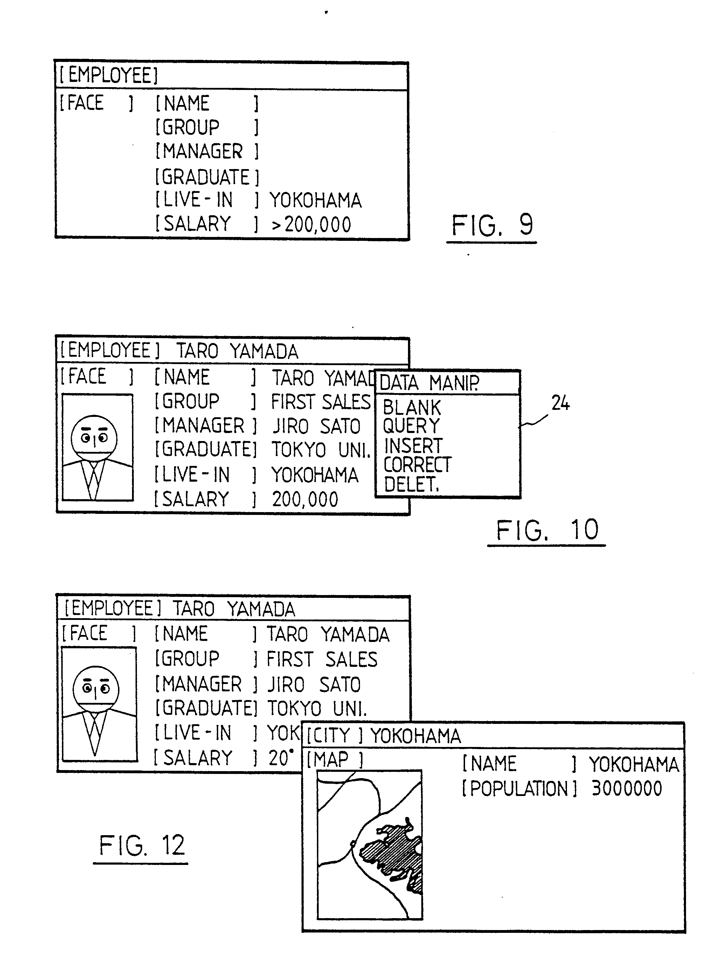

Query operation is next described. Query operation as already described, searches based on a query condition typed in a field of a card, and indicates the search result on the card. Fig.9 shows an example of a query condition. This example searches for employees earning 200,000 yen per month and living in Yokohama city.

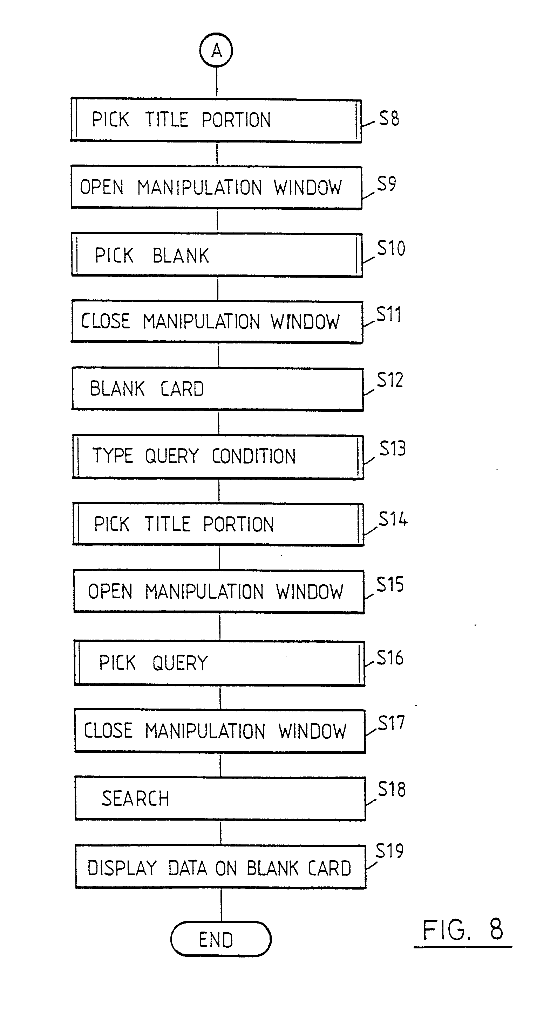

Referring to Figs.1 and 8, the description is started at the state where an example card is already displayed. For query operation the card should be cleared and then a query condition be typed in. For this purpose, first the title portion of the card is picked (step S8). In response to this picking, the data manipulation portion 14 opens a data manipulation window 24 as shown in Fig.10 (step S9). Then the user picks "Blank" of the data manipulation window 24. As a result the data manipulation window is closed (step S11) and the card is made blank (step S12). A search condition is next typed for example as shown in Fig.9 (step S13), and then the title portion is picked again ( step S14) to open the data manipulation window 24 (step S15), and further "query" is picked (step S16). In response to this picking, the data manipulation window is closed and the search is performed ( steps S17 and S18). Based on the search result the identifier of the entity is determined and under this identifier the card displaying portion performs the display (step S19).

In this regard, in the step S18, the FL language level and SQL language level have the following procedures respectively.

FL : GET Employee(name(live-in(.)) = 'Yokohama city' and salary(.)>200000)

    PROJECT face(.), name(.), group(.), name(group(.)), manager(group(.)), name(manager(group(.))), graduation(.),name(graduation(.)), live-in(.), name(live-in(.)), salary(.)

SQL : select e1.face, e1.name, e1.group, e2.name, e2.manager, e3.name, e1.graduation, e4.name, e1.live-in, e5.name, e1.salary

    from Employee e1, Group e2, Employee e3. University e4, City e5

      where e1.group = e2.id and e2.manager = e3.id and e1.graduation = e4.id and e1.live-in = e5.id and (e5.name = 'Yokohama city' and e1.salary >200000)


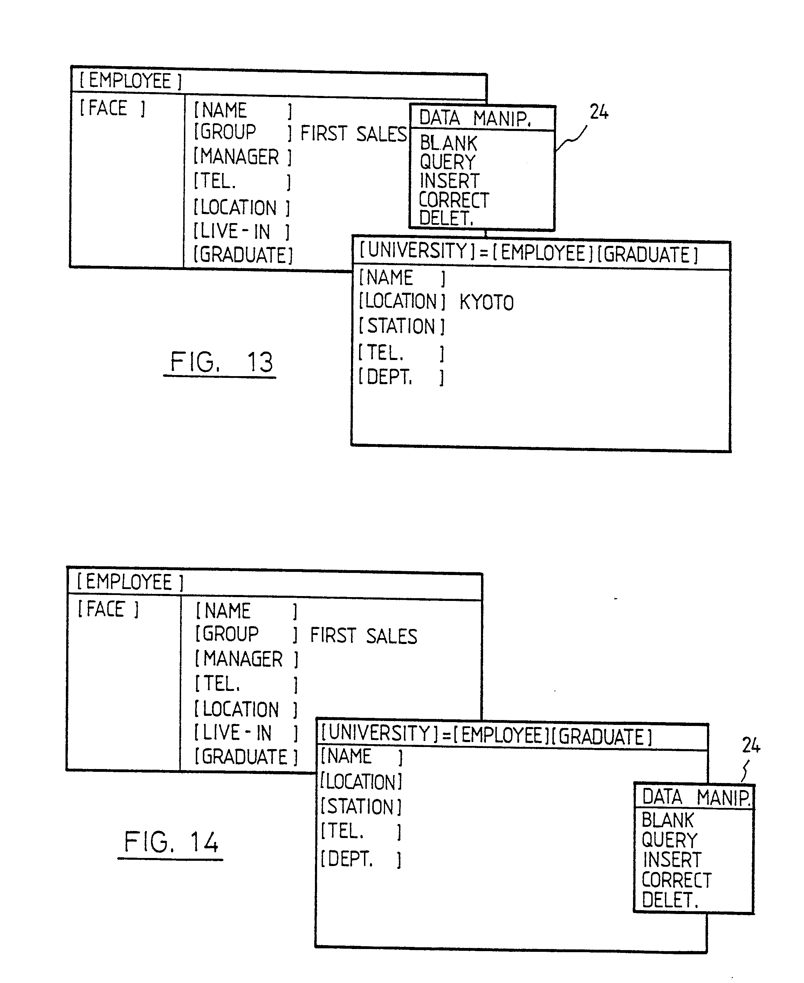

In navigation, using the displayed content on the existing card as a clue or hint, the user determines the new card which he/she investigates next, and by picking on the existing card, the new card is immediately displayed. Items or item values on the card is a part of the reduced drawing of the conceptual schema as shown in Fig.3, and therefore guide the user to the card of a required entity. It is consequently very convenient. Fig.12 shows an example of navigation, where the card of the employee "Taro Yamada" is displayed and newly the card of his residence "Yokohama city" is displayed.

Now, for navigation, a card should be already displayed. Here it is assumed that the card of "Taro Yamada" of Fig.12 currently appears.

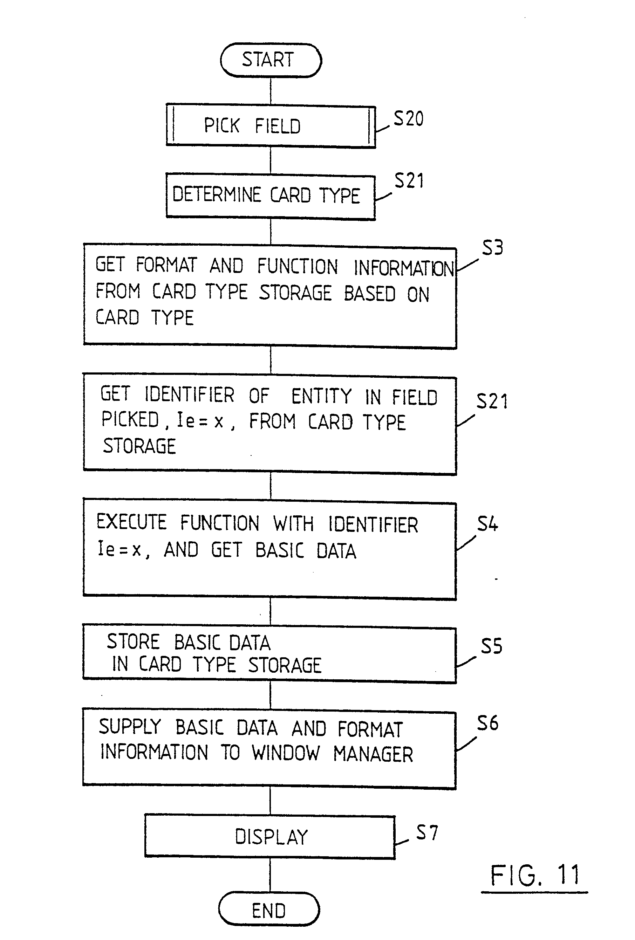

Referring to Figs.1 and 11, in order to start navigation, the field relevant to the entity wanted to be displayed is picked by the mouse 7 (step S20). A target entity type determination portion 25 of the navigation portion 18 accesses, based on the picked position and the window information in the screen directory, not shown, the card type storage 19 to obtain the entity type of the item in the picked field. In the example of Fig.12, since the field "Live-in" was picked, the entity type "city" is obtained as a target entity type Te. This determination result Te is supplied to th card type determination portion 26 which thereafter determines the card type Tc based on Te. (step S21). The card type Tc is uniquely determined on Te when only one card type corresponds to each entity type. A plurality of card types can be prepared for one entity type with different privilege levels, and in such a case menu selection is required.

An identifier accessing portion 27 accesses the card storage 20 based on information about the position picked by the mouse 7 and window information in the screen directory, and then obtain the identifier, Ie = x32, of the entity in the picked field (step S22). The identifier Ie is supplied along with the card type signal Tc to the card displaying portion 16, and a new card is displayed as shown in Fig.12. The description about this is overlapped with one about displaying an example card, so that it is not repeated here. Further in Fig.12 the portion corresponding to ones in Fig.7 are shown as accompanied with the same signs.

FL language level and SQL language level of navigation have the following procedures respectively.

FL : GET City( id = xxxx)

    PROJECT name(.), population(.), map(.)

where "xxxx" is the item value of the address of the "employee" card ( The surrogate is on the card for convenience).

SQL : select name, population, map

from city

where id = xxxx


Further as a variation of the navigation there is blank card navigation which is illustrated in Figs.13 and 14. In the example og Fig.13, "graduation" of the blank card of "employee" is picked and then the blank card of "university" is displayed. Thereafter a query using the two card is done. In the example, employees are searched who belong to the first sales group and graduated from a university in Kyoto. In the example of Fig.14, universities are searched from which employees of the first sales group graduated. The examples of Figs.13 and 14 the history of card navigation is indicated in the title portion. Further in Fig.13 the search is for employees, so that the query is performed using the data manipulation window related to the "employee" card, on the other hand, in Fig.14 the search is for universities, so that the query is performed using the data manipulation window related to the "university" card.

One FL sentence consists of a portion which selects entities, selection portion, and a portion which maps the selected entities onto basic data such as character strings or numbers, or other entities, projection portion.

1) Selection portion
A selection portion is either of the following three types.

I) Basic type
E(r)      where E: a set of certain entities( or type)
    r: a search condition

Example: Employee(salary(.)>300000)
A set of employees earning more than three hundred thousand yen

Employee(salary(.)>300000 AND name(graduate(.)) = 'Tokyo University'
A set of employees earning more than three hundred thousand yen and having graduated from Tokyo University

In particular if the identifier of the entity is known then the following is used.

Employee[ID = 007]

This is used for navigation.

II) Projection type
f(E(r))      where f indicates a function
It maps a set of entities represented in a basic type onto another set of entities by a function f.

Example: graduate(employee[salary(.)>300000])
A set of universities from which employee earning more than three hundred thousand yen graduated.

III) Conjunction type
This type has a basic type and a projection type and further set operator such as UNION,INTERSECTION,MINUS which combines a basic type and a projection type.

Example: Employee[salary(.)>300000] UNION
Employee[name(group(.)) = 'OS']

A set of employees earning more than three hundred thousand yen or belonging to OS group.

graduate(employee[name(group(.)) = 'OS'
INTERSECTION university[name(location(.)) = 'Osaka city']

A set of universities located in Osaka city, which employees belonging to the OS group graduated from.

An FL sentence consists of either of a basic type, projection type and conjunction type followed by a string of functions which is interposed between a pair of " ". The portion from the leading slash to the trailing slash is referred to as a projection portion.

Example : Employee[name(graduate(.)) = 'Tokyo University'] · name(.), group(.), manager(group(.)),salary(.)·

The projection portion means that names, groups, manager and salaries of employee who graduated from Tokyo University are indicated

What are obtained through the FL sentence are results of the functions name(.), group(.), manager-(group(.)), salary(.) with augments being entities determined by the selection portion, and the ranges of them are character, group, employee, integer. Regarding to group and employee, identifiers of entities return, so that surrogates are indicated. A surrogate means a representative value of a card itself, and indicated in the title portion of the card.

As explained above, according to the present invention, since objects in a real world model are expressed using a form such as a card like form, a situation in the real world relevant to the card can be easily comprehended from what the card indicates. Further since in response to pointing a field of the card, the another relevant object can be immediately displayed , it is easier to use.

In other words, the disclosed embodiment is the combination of a relational data base, a complex syntax language for processing it and apparatus handling the data base by executing in the language, but which enables the user, within reason, to perform the macro-operations which he would do were he using the data base provided on a manual card system without having to know or bother about the language.

The structure of the data base is comprised of two classes of entity, those accessible by name or via another entity, and those accessible only via another entity. These are referred to as complicate entities and basic entities, respectively. In data base terms, a complicate entity can be both parent and child, while a basic entity can be only a child. Basic entities are stored as such while complicate entities are compiled.

An entity is stored as format and data separately, these being combined in entirety for display purposes and, in appropriate part, for syntax generation, when required. The number of possible formats is limited so that full selection is a two step operation - first get the format and then get the data - by name or by relational operation, this appearing to the user to be equivalent to finding the drawer and then finding the card in the drawer, by name or by cross-reference.

Both local and relational operations can be performed and selection of the operation to be performed is by menu. If a relational operation is instructed, selection of a field in the format of the starting entity automatically generates, within the apparatus, the appropriate syntax frame, which is filled with the parameters corresponding to that part of the data segment of the entity that is displayed in the field. If the instructed operation is local, the syntax is not generated.

Selection of operation and field is by selection on the display by mouse. Additional operation parameters and data can be entered from a keyboard. Generation and updating of the display is by a window manager. The individual micro-operations, such as those of the window manager and the mouse, the accessing of the stored data of a named entity, given its name, the accessing of a stored information record in one to one correspondence to a selected display field, and so on, are conventional and are well known to those skilled in the art.

Windowing is used as it is possible to move from parent to parent .... to basic child so that the menu which is used to select operations is required to be displayed after each entity is displayed, used and removed, and, for the sake of the user, each entity display in a chain is retained. As a parallel, the operation appears to the user to be that of going to a named card which contains cross-references and selecting which cross-reference to follow to find the next card, until a card is reached which contains no cross-references, retaining "in his hand", each card found on the way, all the time, not needing to know the syntax in which the apparatus executes.

## Claims

1. Database processing apparatus including data storage, a storage addressing system capable of accessing information in storage by record and a user/machine interface which includes a display area, user data input means and a locator mechanism, interactive with the display area, by which the user can select a portion of the display area, the storage containing records defining a common set of formats and records defining known types of data and a processor responsive to the data input means and the locator mechanism and controlling the addressing mechanism and the display area and arranged in operation to respond

to a data input representing a known entity name to cause the format record for that named entity to be accessed together with the data records for that entity and to generate a display on the display area from such records, the format defining a card-like layout with geographically differentiated fields for different data types in which the data from the data records is appropriately displayed and to automatically overlay the generated display with an action display offering a set of operation options, one possible operation being effective on the data accessed and one possible operation being effective to access another entity or other data, and

to the locator mechanism selecting a field of action display to register the selected operation option and to remove the overlayed action display and, thereafter, to the selection of a field of the generated display, to cause the selected operation to be performed in relation to that field and its contained data, so that, if the selected operation is an access operation, the records defined by the combination of the selected field and its contained data are accessed and a new display is generated

whereby the user can interrogate stored data in a manner analogous to the handling of a manual card file without having to enter any code.

2. Apparatus as claimed in claim 1, wherein the database is comprised of two species of entity, a complicate entity which can be accessed from the user/machine interface via its name or via another complicate entity and for which the format fields are automatically linked, when an access operation is selected, with a code format particular to that field, its contained data and access operation and a basic entity which can be accessed via the user/machine interface indirectly either as part of a complicate entity or via an access operation selected via a complicate entity.

3. Apparatus as claimed in claim 2, wherein, for a selected access operation in relation to an empty field, a code format is linked and executed which selects all and displays one of the set of entities having the attributes represented by the data in the non-empty fields of the entity on display and, for a selected field containing data, the entity conforming to the field and the contained data is accessed and displayed.

4. Apparatus as claimed in claim 3, wherein the action display enables the selection of a FORWARD and a BACKWARD operation permitting the selective scrolling in a bidirectional mode through a selected set of entities.

5. Apparatus as claimed in any preceding claim, wherein the action display enables the selection of one of a plurality of field modifying operations.

6. Apparatus as claimed in any preceding claim, wherein the information on an item(s) of basic data to be displayed and the information relating the fields with types of entities, stored in the storage means are defined according to a data model of a subject real world via a relational data model thereof.

7. A database system comprising a processor, storage, a display and input means interactive therewith, the processor executing in a complex syntax language in respect of operations concerned with the data base, the data base being composed of complicate entities which are accessible by name and can be both parent and child and basic entities which can be only children accessible from a parent complicate entity, each complicate entity comprising a particular one of a plurality of stored multiple field formats and an individual data set, the processor being arranged to interface, via the display and input means, with a user, wherein the processor includes

logic, which, on the user inputting a complicate entity type and the individual name of that complicate entity, causes the processor to accesses the format for that type and the data set for that individual complicate entity, combining and displaying the same and displaying an operation menu; and which, on the user selecting an operation via the operation menu, which operation can be local to that entity or relational, causes the processor to become responsive to further inputs from the user in the appropriate one of two modes, local or relational; and

logic which, if the relational mode is selected on the operational menu and a field is selected on the entity display, causes the processor to fetch a syntax structure in one to one correspondence with that field for that format, inserting parameters derived from the particular data in that field for the entity, and to execute the syntax, fetching the format and data so derived generating a next display;

the processor, if the local mode is selected, performing direct processing in respect of the displayed entity, whereby, without knowledge of the data base handling syntax, a user can exercise the data base in a manner analogous to a manual card file system.

0 287 858

FIG. 1

0 287 858

SUBJECT AREA

EXTERNAL SCHEMA | EXTERNAL SCHEMA | EXTERNAL SCHEMA

CONCEPTUAL SCHEMA

INTERNAL SCHEMA

PHYSICAL DATABASE

FIG. 2

[EMPLOYEE] TARO YAMADA ——— 1

[FACE ] [NAME ] TARO YAMADA
 [GROUP ] FIRST SALES
 [MANAGER ] JIRO SATO
 [GRADUATE ] TOKYO UNIVERSITY ——— 2
 [LIVE - IN ] YOKOHAMA
 [SALARY ] 200,000

FIG. 4

CARD MANAGER   11

WINDOW MANAGER   10   3

TRANSLATOR   12

COMMUNICATION CONTROL   14

5

6

7

8

COMMUNICATION CONTROL   15   4

SQL/DS   13

9

FIG. 5

IMAGE

STRING      INTEGER     STRING     STRING

NAME    FACE    SALARY    NAME    CODE

EMPLOYEE    GROUP    GROUP

MANAGER    UPPER GROUP

GRADUATION     LIVE-IN

UNIVERSITY    LOCATION    CITY

NAME    DEPARTMENT    PRESIDENT    NAME    MAP    POPULATION

STRING    STRING    STRING    INTEGER

STRING    IMAGE

## FIG. 3

```
CARD TYPE
   [EMPLOYEE ]
   [GROUP    ]
   [GRADUATE ]
   [CITY     ]
```

## FIG. 6

```
                    ┌─────────┐
                    │  START  │
                    └────┬────┘
                         │
              ┌──────────────────────┐
              │        MENU          │ ─── S1
              └──────────┬───────────┘
                         │
              ┌──────────────────────┐
              │   PICK  CARD  TYPE   │ ─── S2
              └──────────┬───────────┘
                         │
         ┌───────────────────────────────────┐
         │ GET FORMAT AND FUNCTION INFORMATION│
         │ FROM CARD TYPE STORAGE BASED ON    │ ─── S3
         │ CARD TYPE                          │
         └───────────────┬───────────────────┘
                         │
         ┌───────────────────────────────────┐
         │ EXECUTE FUNCTION WITH IDENTIFIER   │
         │ Ie=0 AND GET BASIC DATA            │ ─── S4
         └───────────────┬───────────────────┘
                         │
         ┌───────────────────────────────────┐
         │ STORE BASIC DATA IN CARD STORAGE   │ ─── S5
         └───────────────┬───────────────────┘
                         │
         ┌───────────────────────────────────┐
         │ SUPPLY BASIC DATA AND FORMAT       │
         │ INFORMATION TO WINDOW MANAGER      │ ─── S6
         └───────────────┬───────────────────┘
                         │
              ┌──────────────────────┐
              │      DISPLAY         │ ─── S7
              └──────────┬───────────┘
                         │
                        (A)
```

FIG. 7

```
                    ( A )
                      |
        ┌─────────────────────────────┐
        ‖  PICK  TITLE  PORTION        ‖──S8
        └─────────────────────────────┘
                      |
        ┌─────────────────────────────┐
        | OPEN  MANIPULATION  WINDOW   |──S9
        └─────────────────────────────┘
                      |
        ┌─────────────────────────────┐
        ‖  PICK  BLANK                 ‖──S10
        └─────────────────────────────┘
                      |
        ┌─────────────────────────────┐
        | CLOSE  MANIPULATION  WINDOW  |──S11
        └─────────────────────────────┘
                      |
        ┌─────────────────────────────┐
        | BLANK  CARD                  |──S12
        └─────────────────────────────┘
                      |
        ┌─────────────────────────────┐
        ‖ TYPE  QUERY  CONDITION       ‖──S13
        └─────────────────────────────┘
                      |
        ┌─────────────────────────────┐
        ‖  PICK  TITLE  PORTION        ‖──S14
        └─────────────────────────────┘
                      |
        ┌─────────────────────────────┐
        | OPEN  MANIPULATION  WINDOW   |──S15
        └─────────────────────────────┘
                      |
        ┌─────────────────────────────┐
        ‖  PICK  QUERY                 ‖──S16
        └─────────────────────────────┘
                      |
        ┌─────────────────────────────┐
        | CLOSE  MANIPULATION  WINDOW  |──S17
        └─────────────────────────────┘
                      |
        ┌─────────────────────────────┐
        | SEARCH                       |──S18
        └─────────────────────────────┘
                      |
        ┌─────────────────────────────┐
        | DISPLAY  DATA  ON  BLANK  CARD |──S19
        └─────────────────────────────┘
                      |
                (  END  )
```

FIG. 8

```
[EMPLOYEE]

[FACE    ]    [NAME      ]
              [GROUP     ]
              [MANAGER   ]
              [GRADUATE ]
              [LIVE - IN  ]  YOKOHAMA
              [SALARY    ]  > 200,000
```

## FIG. 9

```
[EMPLOYEE]  TARO  YAMADA

[FACE    ]    [NAME      ]  TARO  YAMAD
              [GROUP     ]  FIRST SALES
              [MANAGER ]  JIRO  SATO
              [GRADUATE]  TOKYO UNI.
              [LIVE - IN  ]  YOKOHAMA
              [SALARY    ]  200,000
```

```
DATA  MANIP.

BLANK
QUERY
INSERT
CORRECT
DELET.
```
24

## FIG. 10

```
[EMPLOYEE]  TARO  YAMADA

[FACE    ]    [NAME      ]  TARO  YAMADA
              [GROUP     ]  FIRST  SALES
              [MANAGER ]  JIRO  SATO
              [GRADUATE]  TOKYO  UNI.
              [LIVE - IN  ]  YOK
              [SALARY    ]  20°
```

```
[CITY ]  YOKOHAMA

[MAP  ]                [NAME        ]  YOKOHAMA
                       [POPULATION ]  3000000
```

## FIG. 12

```
              ┌─────────────┐
              │    START    │
              └──────┬──────┘
                     │
         ┌───────────┴───────────┐
         │     PICK  FIELD       │── S20
         └───────────┬───────────┘
                     │
         ┌───────────┴───────────┐
         │ DETERMINE CARD TYPE   │── S21
         └───────────┬───────────┘
                     │
    ┌────────────────┴────────────────┐
    │ GET FORMAT AND FUNCTION INFORMATION │── S3
    │ FROM CARD TYPE STORAGE BASED ON  │
    │ CARD TYPE                        │
    └────────────────┬────────────────┘
                     │
    ┌────────────────┴────────────────┐
    │ GET IDENTIFIER OF  ENTITY IN FIELD │── S21
    │ PICKED, Ie = x , FROM CARD TYPE  │
    │ STORAGE                          │
    └────────────────┬────────────────┘
                     │
    ┌────────────────┴────────────────┐
    │ EXECUTE FUNCTION WITH IDENTIFIER │── S4
    │ Ie = x , AND GET BASIC DATA      │
    └────────────────┬────────────────┘
                     │
    ┌────────────────┴────────────────┐
    │ STORE  BASIC DATA                │── S5
    │  IN CARD TYPE STORAGE            │
    └────────────────┬────────────────┘
                     │
    ┌────────────────┴────────────────┐
    │ SUPPLY  BASIC DATA  AND FORMAT   │── S6
    │ INFORMATION TO WINDOW  MANAGER   │
    └────────────────┬────────────────┘
                     │
         ┌───────────┴───────────┐
         │       DISPLAY         │── S7
         └───────────┬───────────┘
                     │
              ┌──────┴──────┐
              │     END     │
              └─────────────┘
```

FIG. 11

[ EMPLOYEE ]

| [ FACE ] | [ NAME      ] |
|          | [ GROUP     ] FIRST SALES |
|          | [ MANAGER ] |
|          | [ TEL.      ] |
|          | [ LOCATION ] |
|          | [ LIVE - IN ] |
|          | [ GRADUATE ] |

DATA MANIP.

BLANK
QUERY
INSERT
CORRECT
DELET.

24

[ UNIVERSITY ] = [ EMPLOYEE ] [ GRADUATE ]

[ NAME      ]
[ LOCATION ]  KYOTO
[ STATION  ]
[ TEL.      ]
[ DEPT.    ]

## FIG. 13

[ EMPLOYEE ]

| [ FACE ] | [ NAME      ] |
|          | [ GROUP     ] FIRST SALES |
|          | [ MANAGER ] |
|          | [ TEL.      ] |
|          | [ LOCATION ] |
|          | [ LIVE - IN ] |
|          | [ GRADUATE ] |

[ UNIVERSITY ] = [ EMPLOYEE ] [ GRADUATE ]

[ NAME      ]
[ LOCATION ]
[ STATION  ]
[ TEL.      ]
[ DEPT.    ]

24

DATA MANIP.

BLANK
QUERY
INSERT
CORRECT
DELET.

## FIG. 14

FIG. 15